# EUROPEAN PATENT SPECIFICATION

(11) **EP 2 278 146 B1**
(45) Date of publication and mention of the grant of the patent: **24.07.2013**
(21) Application number: 10005249.7
(22) Date of filing: 19.05.2010
(51) Int. Cl.: F02K 1/06, F02K 1/08, F02K 1/12, F02K 1/15, F02K 1/32, F02K 3/06

(54) **Actuation system for a translating variable area fan nozzle**
Betätigungssystem für eine Flachstrahldüse mit Umsetzung verschiedener Bereiche
Système d'actionnement pour moduler une zone variable de buse de ventilateur

(30) Priority: 16.06.2009 US 485559
(43) Date of publication of application: 26.01.2011
(73) Proprietor: Rohr, Inc., Chula Vista, CA 91910-2098 (US)
(72) Inventor: Ramlaoui, Jihad I., Chula Vista, California 91915 (US); Amkraut, Daniel M., San Diego, California 92115 (US); Pinto, Geoffrey, San Diego, California 92107 (US); Shetzer, Daniel, San Diego, California 92110 (US); Hawksworth, Andrew Robert, Shifnal, Shropshire TF11 8EY (GB); Harvey, John, Perton, Wolverhampton WV6 7 SJ (GB); Evans, Alan K., Fordhouses, Wolverhampton, West Midlands WV10 6 EX (GB); Chandarana, Vikram, Perton, Wolverhamptonn WV6 7SA (GB); Moorhouse, Roger, Penkridge, South Staffordshire ST19 5UE (GB)
(74) Representative: Bailey, Richard Alan

(56) References cited:
- EP-A2- 0 109 219
- EP-A2- 1 052 427
- WO-A2-2009/029401
- FR-A1- 2 917 788
- FR-A1- 2 921 976
- FR-A1- 2 922 059

## Description

### TECHNICAL FIELD

The present invention generally relates to gas turbine aircraft engines, and particularly relates to an actuation system for a translating variable area nozzle assembly for a turbofan aircraft engine for use in selectively controlling the fan bypass flow exhausted from the engine in order to adjust the engine's performance under varying flight conditions.

### BACKGROUND

Typical aircraft turbofan jet engines include a fan that draws and directs a flow of air into a nacelle and into and around an engine core. The nacelle surrounds the engine core and helps promote the laminar flow of air around the core. The flow of air that is directed into the engine core is initially passed through a compressor that increases the air flow pressure, and then through a combustor where the air is mixed with fuel and ignited. The combustion of the fuel and air mixture causes a series of turbine blades at the rear of the engine core to rotate, and to drive the engine's rotor and fan. The high-pressure exhaust gases from the combustion of the fuel and air mixture are thereafter directed through an exhaust nozzle at the rear of the engine.

Bypass flow is air that is directed around the engine core. In turbofan engines, the bypass flow typically provides the main thrust for an aircraft. The bypass flow also can be used to help slow a landed aircraft. Thrust reversers mounted in the nacelle structure selectively reverse the direction of the bypass flow to generate reverse thrust. During normal engine operation, the bypass flow may or may not be mixed with the engine core exhaust before exiting the engine assembly.

Several turbofan engine parameters are important to optimize design characteristics and performance. An engine's bypass ratio (BPR) is the ratio of the air mass that passes through the engine's fan duct to that passing through the engine core. Higher BPR engines can be more efficient and quiet than lower BPR engines. In general, a higher BPR results in lower average exhaust velocities and less jet noise at a specific thrust rating. A turbofan engine's performance is also affected by the engine's fan pressure ratio (FPR). FPR is the ratio of the air pressure at the engine's fan nozzle exit to the pressure of the air entering the fan. The lower the FPR, the lower the exhaust velocity, and the higher an engine's propulsive efficiency. Reducing an engine's FPR can reach a practical limit, however, as a low FPR can cause engine fan stall, blade flutter or compressor surge under certain operating conditions.

One solution to these problems includes varying the fan nozzle exit area of a high-BPR engine during operation to optimize engine performance under various flight conditions. By selectively varying the fan nozzle's exit area, an engine's bypass flow characteristics can be adjusted to match a particular flight condition. Unfortunately, prior variable area nozzle systems typically have been heavy, expensive and somewhat complex in their structure and operation, and generally require the coordinated movement of multiple components that employ complex drive mechanisms. WO 2009/029491 discloses a variable area fan nozzle with a translating ring assembly. As the ring translates, the trailing edge of the ring defines a variable nozzle exit area. US 2010/0205931 discloses a linear actuator in which an epicyclic gearbox is connected to both the inner and outer parts of a ball screw. US 2010/0192715 discloses a multiple acting linear actuator comprising multiple concentric threaded bodies. US 2010/0218480 discloses a screw actuator with a ball joint that accommodates angular offset between the parts thereof. EP1052427 discloses an actuator with a non-telescoping input shaft.

Accordingly, a need exists for a variable area nozzle assembly for turbofan aircraft engine that promotes a cost effective, simple and efficient operation for control of engine output under certain flight conditions. In particular, there is a need for an actuation system for selectively translating a nozzle of such a variable area nozzle assembly.

### SUMMARY

In one embodiment, a variable area fan nozzle assembly for a turbofan engine includes a nacelle having an aft edge and a translating thrust reverser sleeve having a trailing edge. The thrust reverser sleeve is movably disposed aft of the nacelle's aft edge and is movable between a forward position and an aft position. The variable area fan nozzle assembly further includes a translating fan nozzle having a forward edge. The fan nozzle is movably disposed behind the trailing edge, and is movable between a stowed position and a deployed position. An upstream bypass flow exit is defined between the trailing edge and the forward edge when the fan nozzle is in the deployed position. The variable area fan nozzle assembly also includes an actuation system for selectively moving the fan nozzle between the stowed position and the deployed position. The actuation system includes a power drive unit, at least one extensible actuator disposed between the thrust reverser sleeve and the fan nozzle, and at least one telescoping coupling disposed between the thrust reverser sleeve and the nacelle. The extensible actuator is rotatably coupled to the power drive unit through the telescoping coupling, and includes a jack screw and a threaded sleeve that is threadably engaged with the jack screw. Rotation of the telescoping coupling at a first rotational speed causes rotation of the jack screw at a second rotational speed that is different from the first rotational speed.

In another embodiment, an actuator for a translating variable area fan nozzle includes an extensible portion comprising a jack screw and a translating threaded sleeve threadably engaged with the jack screw. A telescoping coupling is rotatably coupled to the extensible actuator. The length of the telescoping coupling is altered between a first length and a second length that is longer than the first length while rotational engagement with the extensible actuator is maintained, wherein rotation of the telescoping coupling at a first rotational speed causes rotation of the jack screw at a second rotational speed that is different from the first rotational speed.

In a further embodiment, an actuator system for selectively displacing a translating variable area fan nozzle between a stowed position and a deployed position includes at least one actuator having a jack screw and a telescoping coupling. A power drive unit can be operably connected to the jack screw through the telescoping coupling, wherein rotation of the telescoping coupling at a first rotational speed causes rotation of the jack screw at a second rotational speed that is different from the first rotational speed.

In another embodiment, an actuator system for a variable area fan nozzle includes a jack screw actuator having an input end, and a power drive unit. The actuator system can also include means for coupling the power drive unit to the input end of the jack screw actuator. The means for coupling can be configured to accommodate substantial translational displacement between the input end of the jack screw actuator and the power drive unit.

The foregoing and other features, aspects, and advantages of the invention will be apparent from a reading of the following detailed description together with the accompanying drawings, which are briefly described below.

### BRIEF DESCRIPTION OF THE DRAWINGS

According to common practice, the various features of the drawings discussed below are not necessarily drawn to scale. Dimensions of various features and elements in the drawings may be expanded or reduced to more clearly illustrate the embodiments of the invention.

FIG. 1 is a perspective view of an aircraft engine having a cascade-type thrust reverser and a translating variable area fan nozzle assembly.

FIG. 2 is a longitudinal cross section of an aircraft engine.

FIG. 3 is a rear elevation of an aircraft engine.

FIG. 4 is a perspective view of the thrust reverser and translating variable fan area nozzle assembly portions of an aircraft engine with a thrust reverser sleeve in a stowed position, and a variable area fan nozzle ring in a deployed position.

FIG. 5 is a perspective view of a thrust reverser and translating variable area fan nozzle assembly with both the thrust reverser sleeve and the variable area fan nozzle ring in deployed positions.

FIG. 6 is an exploded perspective view of the thrust reverser and translating variable area fan nozzle assembly shown in FIGS. 4-5.

FIG. 7 is a cross sectional view of a track beam assembly for movably supporting a thrust reverser sleeve and a variable area fan nozzle ring.

FIG. 8 is a partial cross sectional view of a thrust reverser and variable area nozzle assembly.

**FIG. 9** is a perspective view of a portion of a first embodiment of a VAFN actuation system for selectively translating a variable area fan nozzle like that shown in **FIGS. 1-8****.**

**FIG. 10** is a cross-sectional view of the portion of the VAFN actuation system shown in **FIG. 9** taken along line 10-10 and showing the thrust reverser and VAFN nozzle in their stowed positions.

**FIG. 11** is a cross-sectional view of the portion of the actuation system shown in **FIG. 9** taken along line 11-11 and showing the thrust reverser and VAFN nozzle in their stowed positions.

**FIG. 12** is a cross-sectional view similar to that shown in **FIG. 10** with the thrust reverser in a deployed position and the VAFN nozzle in the stowed position.

**FIG. 13** is a cross-sectional view similar to that shown in **FIG. 11** with the thrust reverser in the stowed position and the VAFN nozzle in a deployed position.

**FIG. 14** is a schematic diagram showing the first embodiment of a VAFN actuation system.

**FIG. 15** is a cross section taken along line 15-15 in **FIG. 14****.**

**FIG. 16** is a perspective view of a portion of the VAFN actuation system shown in **FIG. 14****.**

**FIG. 17** is a perspective view of one embodiment of an actuator for use in the VAFN actuation system shown in **FIGS. 9-15****.**

**FIG. 18** is a perspective view of a portion of a second embodiment of a VAFN actuation system for selectively translating a variable area fan nozzle like that shown in **FIGS. 1-8****.**

**FIG. 19** is a schematic diagram showing the second embodiment of a VAFN actuation system.

**FIG. 20** is a perspective view of the second embodiment of a VAFN actuation system shown in **FIGS. 18-19****.**

**FIG. 21** is a cross sectional view of an actuator portion of the second embodiment of a VAFN actuation system showing a thrust reverser in a deployed position and a VAFN nozzle in a stowed position.

**FIG. 22** is another cross sectional view of the actuator portion of the second embodiment of a VAFN actuation system showing the thrust reverser in a stowed position and the VAFN nozzle in a deployed position.

**FIG. 23** is a schematic diagram of a third embodiment of a VAFN actuator system according to the invention.

### DETAILED DESCRIPTION

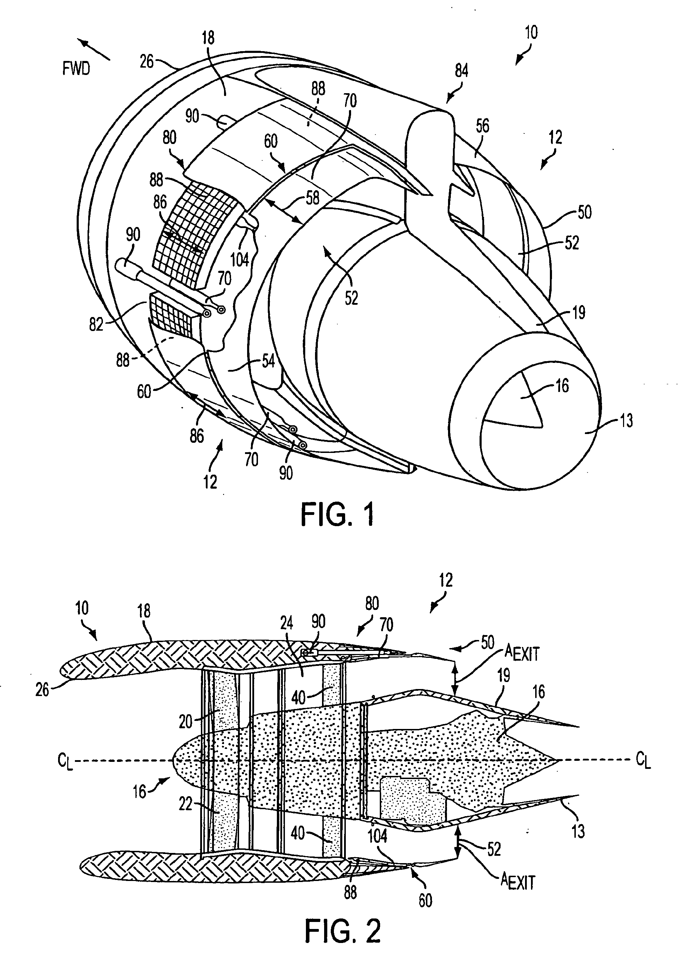

**FIGS. 1-8** show one embodiment of a translating variable area fan nozzle assembly (VAFN) for a turbofan engine **10.**

Referring to **FIGS. 1** and **2****,** the engine **10** includes a trailing edge fan nozzle assembly **12** having a translating nozzle **50** that can be selectively adjusted, for example, as the engine **10** operates under different flight conditions. As discussed above, such an adjustment can be used to optimize an engine's performance. As shown in **FIG. 2****,** the translating nozzle **50** can be selectively translated (i.e., moved fore and aft) to vary the fan nozzle's exit area **"Aₑₓᵢₜ"** in order to optimize engine performance, and as described in detail below, to adjust an amount of engine bypass flow spilled through an upstream exit **60** formed by the variable area fan nozzle assembly **12.** By bleeding or spilling off excess fan flow through the upstream exit **60** before the excess air flow reaches the primary fan nozzle exit 52, lower fan pressure ratios for the same amount of delivered mass flow can be obtained, thereby increasing stall margins and avoiding engine malfunction and shutdown. For purposes of illustration, the variable area fan nozzle assembly **12** is shown in the context of a turbofan jet aircraft engine **10.** The engine **10** can be mounted to a wing or fuselage of an aircraft, for example, by a pylon or other similar support (not shown in the figures).

As shown in **FIG. 2****,** the engine **10** includes an engine core **16** and a stationary nacelle **18** surrounding the core **16.** The engine core **16** is housed within a core cowl **19.** The engine's fan **20** is positioned within an upstream portion of the nacelle **18,** and includes a plurality of fan blades **22** that are mounted on the engine's rotor (not shown). The fan blades **22** rotate about the engine's centerline **C_{L}** and draw a flow of air into an inlet end **26** of the engine **10.** An annular bypass duct **24** is defined between the engine core **16** and the nacelle **18.** The air flow drawn into the engine **10** is accelerated by the rotating fan blades **22,** and a portion of the incoming air flow is directed into and through the engine core **16.**

Bypass flow enters the upstream end of the nacelle **18** and flows around and past the engine core **16.** The bypass flow is accelerated by the rotating fan blades **22** and passes through the bypass duct **24** and past stators **40,** and exits the engine **10** through the variable area fan nozzle assembly **12.** The high-pressure heated exhaust gases from the combustion of the fuel and air mixture exit the engine core **16** through a primary exhaust nozzle **13** at the aft end of the engine **10.**

In the engine assembly **10** shown in **FIGS. 1-8****,** the translating nozzle **50** is a nozzle-like annular airfoil structure mounted at the trailing end of a cascade-type thrust reverser **80** that circumscribes the engine core cowl **19** immediately aft of the nacelle **18.** As shown in **FIG. 2****,** a downstream nozzle exit **52** between the trailing edge of the fan nozzle **50** and the core cowl **19** defines a fan nozzle exit area "**Aₑₓᵢₜ**". Due to the longitudinal variations in the diameter of the core cowl **19,** selective fore and aft movement of the translating nozzle **50** changes the size of the fan nozzle exit area **Aₑₓᵢₜ**. As shown in **FIG. 1****,** the fan nozzle **50** can include a first arcuate nozzle section **54** and a second arcuate nozzle section **56,** each nozzle section **54, 56** being axially translatable in the direction of the bidirectional arrow **58.** Translation of the translating nozzle **50** effects a desired size of the upstream exit **60** (shown in **FIG. 2****),** and also varies the outlet geometry and effective exit area **Aₑₓᵢₜ** of the downstream nozzle exit **52.** Hence, when the translating nozzle **50** is deployed, there is an increase in the bypass flow that is discharged from the engine assembly **10** through both the upstream exit **60** and the enlarged downstream nozzle exit **52.** As shown in **FIGS. 1-3****,** the translating nozzle **50** can be selectively translated fore and aft by a plurality of linear nozzle actuators 70, for example.

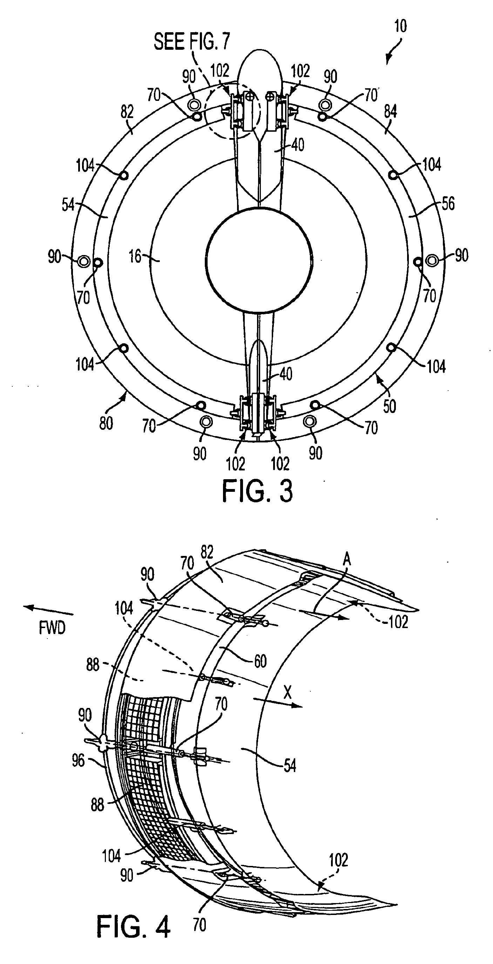

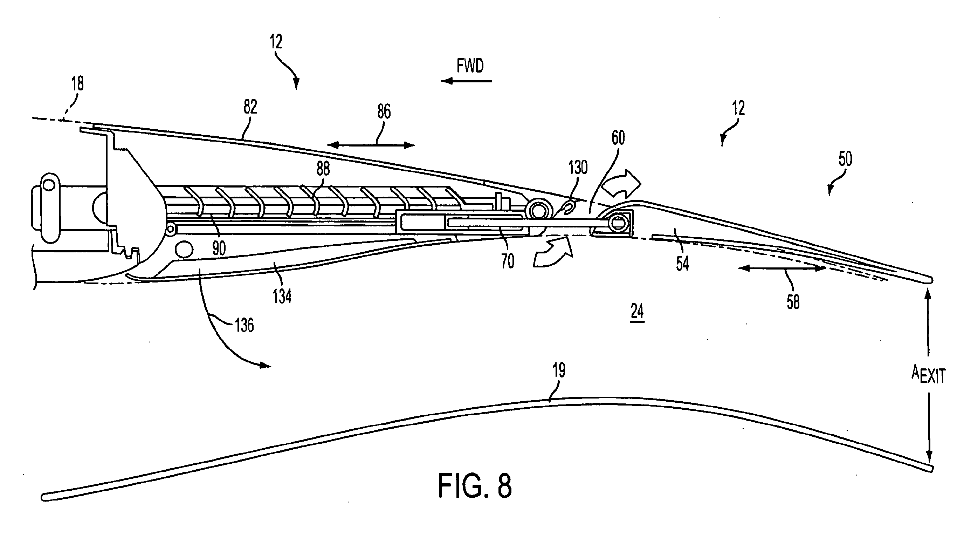

The cascade-type thrust reverser **80** can be positioned forward of the translating nozzle **50** in order to selectively block and redirect bypass flow from the bypass duct **24** in a manner known in the art. In **FIG. 1****,** the thrust reverser **80** and the translating nozzle **50** are both in their stowed positions. As shown in **FIG. 3****,** the thrust reverser **80** can include a first arcuate sleeve section **82** and an opposed second arcuate sleeve section **84.** As indicated by bi-directional arrow **86** in **FIG. 1****,** the thrust reverser sleeve sections **82, 84** can be translated in the fore and aft directions by a plurality of spaced sleeve actuators **90.** In a stowed position, the thrust reverser sleeve sections **82, 84** cover an array of cascade vanes **88.** The cascade vanes **88** are indicated by dashed lead lines in **FIG 1** because they are not visible when the thrust reverser **80** is in its stowed position. Axial translation of the thrust reverser sleeve sections **82, 84** in the aft direction to a deployed position and deployment of a series of blocker doors **134** (as indicated by directional arrow **136** in **FIG. 8****)** within the bypass duct **24** causes bypass air flow to exit the bypass duct **24** through the cascade vanes **88** which turn the exiting flow in a generally forward direction to create reverse thrust.

**FIG. 3** is a partial section view of the aft end of engine **10,** and illustrates one arrangement of the nozzle and sleeve actuators **70, 90,** respectively, around the periphery of the engine **10.** As shown in **FIG. 1****,** and more clearly in **FIG. 3****,** the sleeve half section **82** and the nozzle half section **54** cooperate to generally define an approximately 180-degree sector of the combined thrust reverser and translating nozzle structure. Likewise, sleeve half section **84** and nozzle half section **56** cooperate to generally define an opposed approximately 180-degree sector of the thrust reverser and translating nozzle structure. Together, these approximate 180-degree sectors cooperate to define the complete thrust reverser/translating nozzle structure.

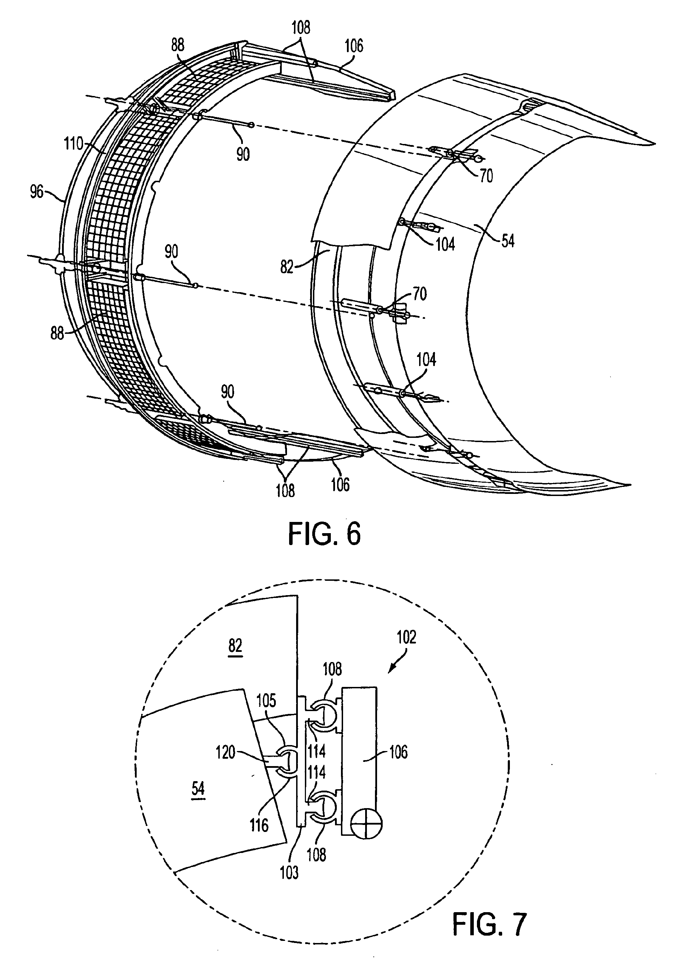

As shown in **FIGS. 1-3****,** the thrust reverser sleeve sections **82, 84** can each be selectively translated in the fore and aft directions by one or more circumferentially spaced sleeve actuators **90** that are connected to the nacelle **18.** In the embodiment shown, three actuators **90** are used for each sleeve half-section **82, 84.** As discussed above, each section **54, 56** of the translating nozzle 50 can be selectively translated by one or more circumferentially spaced nozzle actuators 70. In the embodiment shown, each nozzle actuator **70** is disposed between a thrust reverser sleeve section **82, 84** and a respective fan nozzle section **54, 56.** The sleeve actuators **90** and the nozzle actuators **70** can be electrical, mechanical, pneumatic, hydraulic, or the like, and can be interconnected by appropriate power cables and conduits (not shown). The number and arrangement of nozzle and sleeve actuators **70, 90** can vary according to the thrust reverser and nozzle assembly configurations or other factors. As shown in **FIG. 3****,** the nozzle sections **54, 56** can be movably mounted on the engine **10** by upper and lower track beam assemblies **102. (****FIG. 7** shows a detail view of one embodiment of a track beam assembly **102.)** As shown in **FIGS. 1-3****,** guide tubes **104** can be mounted to the nacelle **18,** and can extend into the nozzle sections **54, 56** to stabilize the nozzle sections **54, 56** against undesirable translation and/or vibration. In addition or alternatively, guide tubes can be used to stabilize the thrust reverser sleeves **82, 84.**

The translating nozzle **50** can be a continuous nozzle (not shown in the figures), or as shown in **FIG. 3****,** can include two or more arcuate nozzle sections having airfoil profiles. The upstream exit **60** shown in **FIG. 2** is formed when the translating nozzle **50** is deployed in the aft direction away from the thrust reverser sleeve sections **82, 84,** and can have the form of a generally circular annular gap. Alternatively, the upstream exit **60** can have other non-circular shapes. The gap **60** between the nozzle sections **54, 56** and the sleeve sections **82, 84** can be continuous, or can be interrupted at one or more locations, such as, for example, at points of separation between nozzle segments **54, 56** of the translating nozzle **50.** As shown in **FIGS. 2-3****,** the bypass duct **24** can be interrupted at one or more locations by one or more stators **40,** or the like.

The translating nozzle **50** and surrounding structure are described below with reference to **FIGS. 4-7****.** In **FIGS. 4-7****,** elements that are obscured or partially obscured due to intervening elements are indicated by dashed lead lines.

**FIG. 4** is a partial view of one embodiment of a mounting structure for a first nozzle section **54** of the translating nozzle **50** and the corresponding, adjacent first sleeve section **82** of the thrust reverser **80.** The second nozzle section **56** of the translating nozzle **50** and the second sleeve section **84** of the thrust reverser **80,** which are shown in **FIGS. 1** and **3****,** can be mounted in a similar manner (not shown). In **FIG. 4****,** the thrust reverser **80** is in a stowed position, and the first sleeve section **84** covers an associated portion of the cascade vanes **88.** Also in **FIG. 4****,** the translating nozzle **50** is in an open or deployed position, and the upstream exit **60** is disposed between the first nozzle section **54** and the first sleeve section **84.** Rearward axial translation of the first nozzle section **54** from its stowed position to its deployed position is indicated in **FIGS. 4-5** by directional arrow **"X".** As shown in **FIG. 4****,** the nozzle actuators **70** can extend from the sleeve section **82** and across the upstream exit **60,** and can connect to a forward portion of the nozzle section **54.** The guide tubes **104** can also extend from the sleeve section **82** and across the upstream exit **60,** and can connect to a forward portion of the nozzle section **54.** A flexible sleeve actuation shaft **96** can interconnect two or more of the sleeve actuators **90** to power the actuators **90,** and/or to synchronize actuation of two or more actuators **90.**

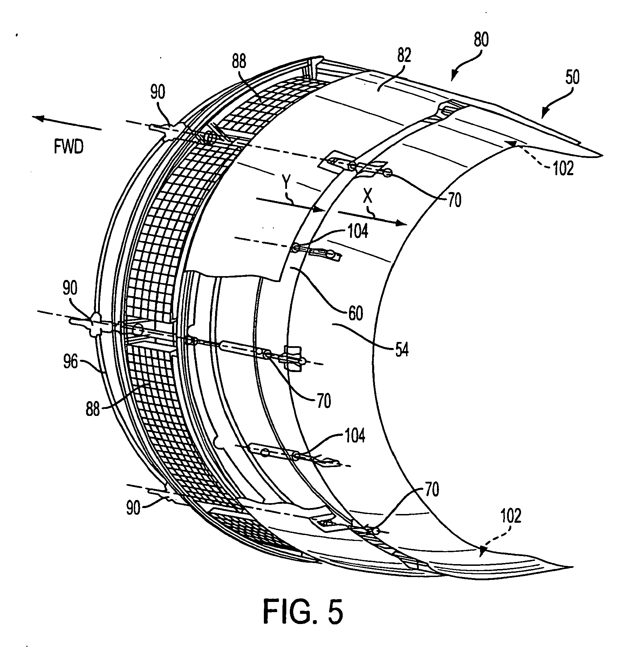

**FIG. 5** shows the first thrust reverser sleeve section **82** and the first translating nozzle section **54** in their deployed positions. Rearward axial translation of the first sleeve section **82** from its stowed position (as shown in **FIG. 4****)** to its deployed position (as shown in **FIG. 5****)** is indicated in **FIG. 5** by directional arrow **"Y".** Rearward translation of the sleeve section **82** exposes the cascade vanes **88** during operation of the thrust reverser **80.**

**FIG. 6** is an exploded view showing the first sleeve section **82** and its corresponding first nozzle section **54** separated from the cascades **88** and sleeve actuators **90.** As shown in **FIG. 6****,** one or more nozzle actuators **70** can movably connect the nozzle section **54** to the thrust reverser sleeve section **82.**

**FIG. 7** shows one embodiment of the upper or lower track beam assemblies **102** for movably connecting a thrust reverser segment **82** and a nozzle section **54** to an engine **10.** Referring generally to **FIGS. 3** and **6** and particularly to **FIG. 7****,** the track beam assembly **102** can include a beam **106** that can be fixedly attached to a torque box **110** on an aft end of a nacelle **18.** The beam **106** can include one or more longitudinally extending guide tracks **108.** A slide **103** can include one or more longitudinally extending track bars **114** that are slidably received within the guide tracks **108** of the fixed beam **106.** The slide **103** is connected to the thrust reverser sleeve section **82,** and thereby slidably connects the sleeve section to the beam **106.** The slide **103** can also include an axially extending track guide **116** in which a translating nozzle track bar **120** on the nozzle section **54** is slidably received, thus slidably connecting the nozzle section **54** to the nacelle **18.** Accordingly, the nozzle section **54** can axially translate as the track bar **120** slides within the track guide **116.** The nozzle section **54** is thereby slidably mounted with respect to the sleeve section **82** of the thrust reverser **80.** The translating sleeve section **82** and the track bar **120** can be actuated through conventional actuation means, such as mechanical, electric, hydraulic or pneumatic or other equivalent actuators, for example.

**FIG. 8** illustrates one method of operating the nozzle section **54** to bleed or spill off excess bypass flow through the upstream exit **60.** As described above, the sizes of the upstream exit **60** and the nozzle exit area **Aₑₓᵢₜ** can be varied in order to achieve different engine operating conditions. **FIG. 8** shows a partial section of a downstream portion of the nozzle assembly **12,** and shows a portion of the bypass air flow (indicated by curved arrows) exiting the bypass duct **24** through the annular upstream exit **60** in one mode of operation of the nozzle assembly **12.** In **FIG. 8****,** the first nozzle section **54** of the translating nozzle **50** is rearwardly displaced from the first thrust reverser sleeve section **82** by its associated nozzle actuators **70.** The second nozzle section **56** (shown in **FIG. 3****)** can be similarly and simultaneously rearwardly displaced from the second thrust reverser sleeve section **84** by its associated nozzle actuators **70.** As shown in **FIG. 8****,** the thrust reverser **80** can include a plurality of blocker doors **134** that are pivotally connected to the first sleeve section **82** and swing in the direction of the curved arrow **136** to selectively block and redirect the bypass flow from the bypass duct **24** and through the cascade vanes **88** during thrust reverser operation.

Still referring to **FIG. 8****,** a high pressure seal **130** can be disposed between the thrust reverser sleeve section **82** and the first nozzle section **54,** such as on the trailing edge of the sleeve section **82,** for example. In certain modes of operation, when the sleeve section **82** and nozzle section **54** are drawn together, the seal **130** can operate to substantially seal any gap between the adjacent sleeve section **82** and nozzle section **54,** and thereby substantially prevent bypass air flow from passing between the sleeve section **82** and nozzle section **54.** Similarly, a seal **130** can be disposed between the second thrust reverser sleeve section **84** and the second nozzle section **56.** Alternatively, the seal **130** can be mounted on the leading edges of the nozzle sections **54, 56,** for example.

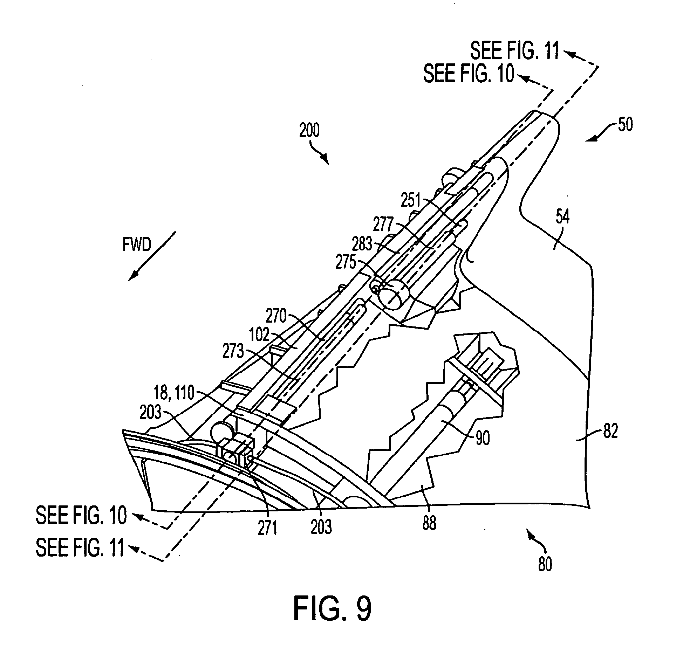

FIGS. 9-17 show one embodiment of a VAFN actuation system **200** for selectively translating a variable area fan nozzle **50** like that described above between its stowed and deployed positions. As shown in **FIG. 9****,** a thrust reverser **80** can include at least one translating thrust reverser sleeve section **82** that is movably mounted aft of a stationary nacelle portion **18.** Fore and aft translation of the thrust reverser sleeve section **82** can be effected by a plurality of thrust reverser actuators **90** that movably connect the sleeve section **82** to a torque box **110** on the aft end of the nacelle portion **18.** When the thrust reverser actuators 90 are retracted, the thrust reverser sleeve section **82** is positioned immediately behind the torque ring **110** in a stowed position, and sleeve section **82** covers the cascade array **88.** A fan nozzle segment **54** is movably disposed aft of the thrust reverser sleeve section **82.** The fan nozzle segment **54** and the thrust reverser sleeve section **82** can be movably supported by a track beam assembly **102** like that shown in **FIG. 7****,** for example.

As shown in **FIG. 9****,** a VAFN actuation system **200** according to the invention can include one or more VAFN actuators **270.** The VAFN actuator **270** can generally include a gear box **271,** a telescoping coupling **273,** and an extensible portion **277.** The gear box **271** can be mounted to the torque box **110.** In the embodiment shown in **FIG. 9****,** the gear box **271** is located proximate to the track beam assembly **102.** The telescoping coupling **273** is rotatably coupled to the gear box **271** and rearwardly extends between the gear box **271** and a jack head **275.** The jack head **275** can be positioned proximate to an aft end of the thrust reverser sleeve segment **82,** and can be coupled to a bracket **283** on the sleeve segment **82.** Accordingly, the jack head **275** moves with the thrust reverser sleeve segment **82** as the sleeve segment **82** is moved between its stowed and deployed positions by the thrust reverser actuator **90.** The extensible portion **277** of the VAFN actuator **270** is disposed between the jack head **275** and a support **251** on the fan nozzle segment **54.** As described below, the extensible portion **277** is configured to move the fan nozzle segment **54** between its forward stowed position and its aft deployed position. In the embodiment shown in **FIG. 9****,** the extensible portion **277** and the telescoping coupling **273** are laterally offset from each other due to an offset between the input and output of the jack head **275.**

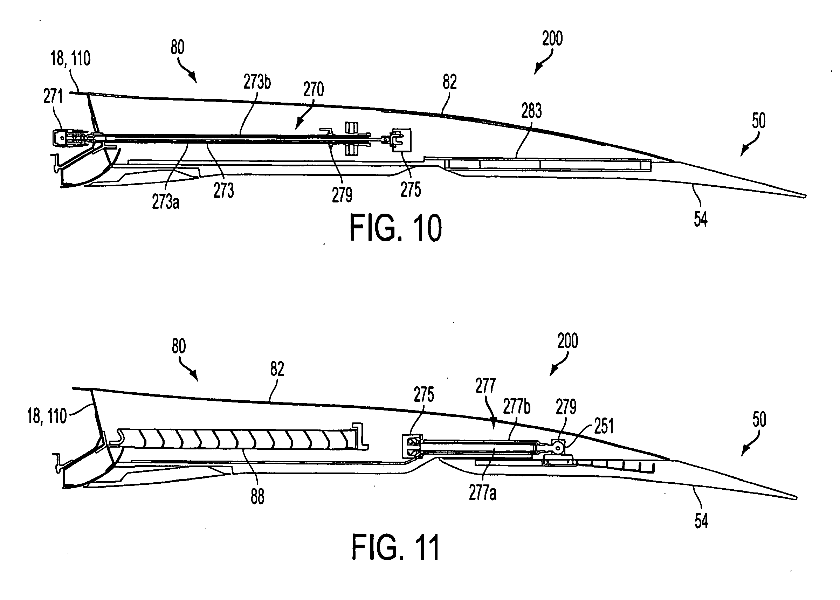

**FIGS. 10-11** show the telescoping coupling **273** and the extensible portion **277** of the VAFN actuator **270** with both the thrust reverser sleeve segment **82** and the fan nozzle segment **54** in their stowed positions. As shown in **FIG. 10****,** the telescoping coupling **273** can include a non-translating portion **273a** and a movable portion **273b.** In one embodiment, the non-translating portion **273a** is an elongated sleeve or tube, and the movable portion **273b** is an elongated shaft that is slidably received within the sleeve **273a.** In the embodiment shown, a forward end of the sleeve **273a** is rotatably coupled to the gear box **271,** and an aft end of the shaft **273b** is rotatably coupled to the jack head **275.** An aft portion of the fixed sleeve **273a** can be connected to an adjacent stationary structure by a bracket **279** or another device. Accordingly, the sleeve **273a** remains stationary even as the thrust reverser sleeve section **82** moves aft toward its deployed position. As described below, the sleeve **273a** and shaft **273b** can be configured such that they are rotatably coupled together yet permit axial displacement of the shaft **273b** within the sleeve **273a.** Accordingly, when the sleeve **273a** is rotated by the gear box **271,** the shaft **273b** also rotates. Though not shown in the figures, the orientation of the telescoping coupling **273** can be reversed such that an aft end of the sleeve **273a** is rotatably coupled to the jack head **275** and a forward end of the shaft **273b** is rotatably coupled to the gear box **271.** As shown in **FIG. 10****,** when the thrust reverser sleeve section **82** is in its stowed position, a substantial portion of the shaft **273b** can be received within the sleeve **273a.** Rotation of the gear box **271** causes rotation of the sleeve **273a** and shaft **273b,** which in turn effect rotation of the jack head **275** and jack screw **277a,** thereby resulting in translation of the threaded sleeve **277b** and the fan nozzle segment **54.** The direction of rotation of the gear box **271** dictates whether the threaded sleeve **277b** and fan nozzle segment **54** move in a forward or rearward direction.

As shown in **FIG. 11****,** the extensible portion **277** of the VAFN actuator **270** can include a jack screw **277a** having a forward end rotatably coupled to the jack head **275,** and an internally threaded sleeve **277b** that is threadably engaged with the jack screw **277a** and includes an aft end **279** connected to a support **251** on the fan nozzle segment **54.** The connection between the aft end **279** and the support **251** prevents rotation of the threaded sleeve **277b.** Accordingly, rotation of the jack screw **277a** by the jack head **275** causes the sleeve **277b** to translate in a fore or aft direction on the jack screw **277a,** thus causing associated displacement of the attached fan nozzle segment **54.**

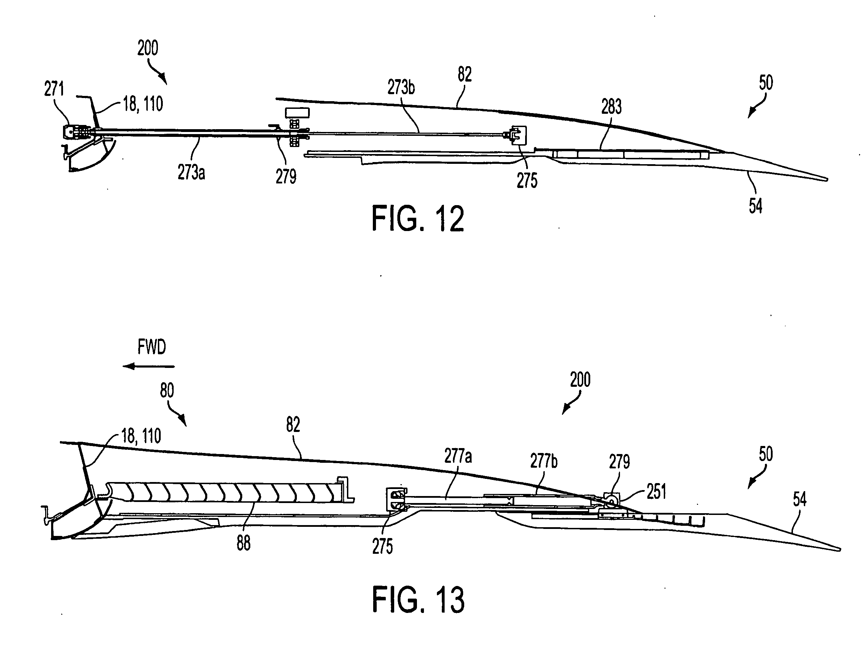

**FIG. 12** shows the telescoping coupling **273** of the actuator **270** with the thrust reverser sleeve section **82** in its deployed position. In this position, the shaft **273b** outwardly extends from sleeve **273a,** and at least a portion of the shaft **273b** remains engaged within the sleeve **273a.** The gear box **271** remains rotatably coupled to the jack head **275** by the telescoping coupling **273.**

**FIG. 13** shows the extensible portion **277** of the actuator **270** in an extended position, and the thrust reverser sleeve section **82** in its deployed position. When extended, the threaded sleeve **277b** displaces the fan nozzle segment **54** away from the torque box **110** and the thrust reverser sleeve section **82.** At least a portion of the sleeve **277b** remains threadably engaged on the jack screw **277a** when the sleeve **277b** is fully extended.

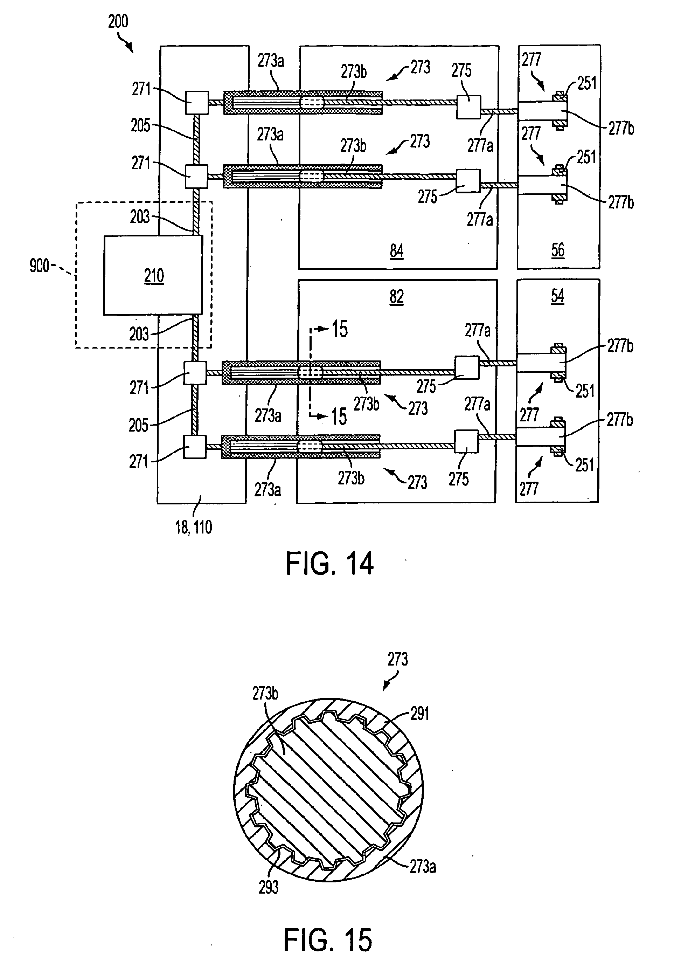

**FIG. 14** is a schematic diagram of one embodiment of a VAFN actuation system **200** that incorporates a plurality of VAFN actuators **270** as described above. The actuation system **200** can be used in a turbofan engine **10** having a cascade-type thrust reverser **80** like that previously described, and to translate one or more fan nozzle segments **54, 56** between their stowed and deployed positions. In the actuator system **200** shown schematically in **FIG. 14****,** a pair of translating thrust reverser sleeve sections **82, 84** are movably disposed aft of a nacelle torque ring **110,** and a pair of translating fan nozzle segments **54, 56** are movably disposed aft of the sleeve sections **82, 84.** Each fan nozzle segment **54, 56** is positioned in its stowed and deployed positions by one or more VAFN actuators **270.** Each VAFN actuator can include a gear box **271,** a telescoping coupling **273** having a non-translating portion **273a** and a movable portion **273b,** a jack head 275, and an extensible portion **277** having an extensible sleeve **277b.** The telescoping coupling **273** permits fore and aft movement of the thrust reverser sleeve sections **82, 84** while maintaining rotational engagement between the gear box **271** and the jack head **275.** In this embodiment **200,** the longitudinal axes of the telescoping coupling **273** and the extensible portion **277** are laterally offset from each other. This offset permits the jack head **275** to be configured such that the rotational speed and/or output torque provided to the extensible portion **277** by the jack head **275** can be different than the rotational speed and or torque provided to the jack head **275** by the gear box **271** and the telescoping coupling **273.**

The plurality of VAFN actuators **270** can be connected to a power drive unit (PDU) **210.** The PDU **210** can be affixed to an engine pylon **900** represented by dashed lines in **FIG. 14****.** Flexible drive shafts **203** rotatably connect first gear boxes **271** to the PDU **210,** and flexible transmission shafts **205** rotatably connect gear boxes **271** not directly connected to the PDU. When actuated, the PDU **210** drives the shafts **203, 205** and interconnected gear boxes **271,** thereby simultaneously actuating the VAFN actuators **270** and effecting desired simultaneous movement of the fan nozzle segments **54, 56** in a forward or aft direction. The telescoping couplings 273 are configured to couple the jack screws 277a to the PDU 210 while also accommodating substantial translational displacement between the input ends of the jack screws 277a and the power drive unit 210. Other means can also be used to couple the jack screws 277a to the PDU 210 in a manner that permits substantial translational displacement between the input ends of the jack screws 277a and the power drive unit 210.

As described above, the shafts **273b** of the telescoping couplings **273** can be slidably received within their respective sleeves **273a** while also being rotatably coupled to the sleeves **273b.** One configuration of the sleeves **273a** and shafts **273b** that permits sliding movement and provides rotational coupling is shown in **FIG. 15****.** In this configuration, at least a portion of each shaft **273b** can include a plurality of circumferentially-spaced ridges or splines **291.** The mating sleeves **273a** can each include a plurality of circumferentially-spaced longitudinal grooves **293** that extend along a substantial portion of the length of the sleeve **273a.** When the splines **291** are engaged with the grooves **293,** each shaft **273b** is substantially free to move longitudinally within its mating sleeve **273a,** but is restrained against substantial rotation relative to its respective sleeve **273a.** Accordingly, the telescoping couplings **273** accommodate movement of the fan nozzle segments **54, 56** with the thrust reverser sleeve sections **82, 84** when the thrust reverser sleeve segments are deployed while also maintaining rotational coupling between the stationary gear boxes **271** and displaced jack heads **275.**

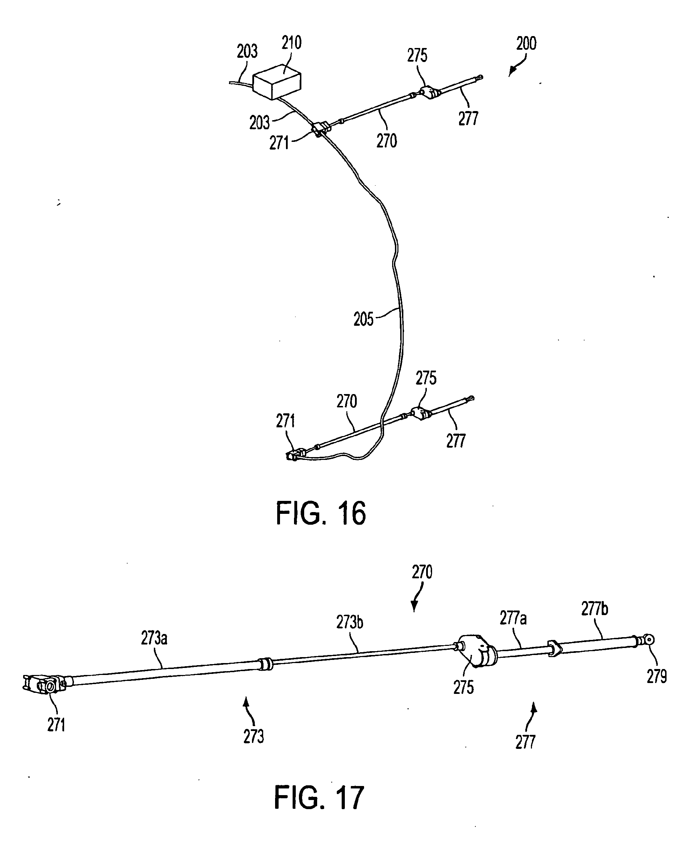

**FIG. 16** shows an isolated portion of the VAFN actuation system **200.** Though the actuation system **200** can include two actuators **270** on each side of the PDU **210** (only one side is shown in **FIG. 16****),** the system **200** can alternatively include a single actuator **270** or more than two actuators **270** on either side. **FIG. 17** shows one embodiment of an actuator **270** for use in the VAFN actuation system **200** described above. In **FIG. 17****,** the telescoping coupling **273** and the extensible portion **277** are both shown in their fully extended positions. In the configuration shown, the positions of the sleeve **273a** and the shaft **273b** can be reversed, if desired. In addition or alternatively, the positions of the jack screw **277a** and threaded sleeve **277b** can be reversed from that shown in **FIG. 17****.**

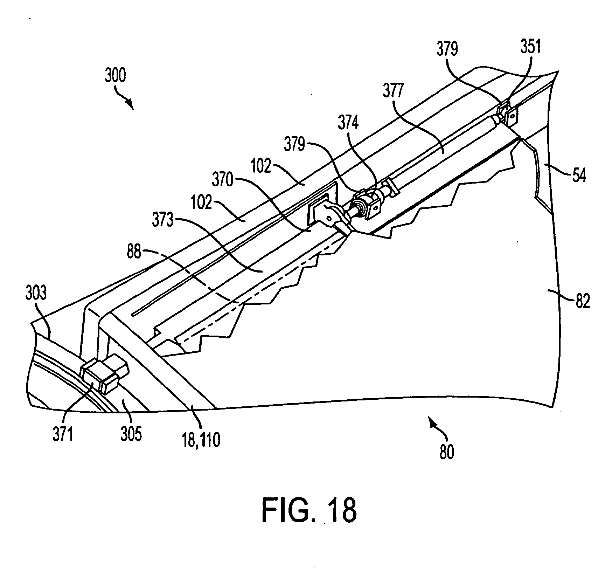

Another embodiment of a VAFN actuation system **300** according to the invention is shown in **FIGS. 18-22****.** This embodiment **300** can be substantially similar to the VAFN system **200** described above except for the differences described below. As shown in **FIG. 18****,** a thrust reverser **80** can include at least one translating thrust reverser sleeve section **82** that is movably mounted aft of a torque ring **110** of a stationary nacelle portion **18.** When the thrust reverser sleeve section **82** is in the stowed position shown in **FIG. 18****,** the sleeve section **82** is positioned immediately aft of the torque ring **110,** and the sleeve section **82** covers the cascade array **88.** A fan nozzle segment **54** is movably disposed aft of the thrust reverser sleeve section **82.** The fan nozzle segment **54** and the thrust reverser sleeve section **82** can be movably supported by a track beam assembly **102** like that shown in **FIG. 7****,** for example.

As shown in **FIG. 18****,** one embodiment of a VAFN actuation system **300** according to the invention can include one or more VAFN actuators **370.** The VAFN actuator **370** can generally include a gear box **371,** a telescoping coupling **373,** and an extensible portion **377.** The gear box **371** can be mounted to the nacelle's stationary torque box **110,** for example. In the embodiment shown in **FIG. 18****,** the gear box **371** is located proximate to the track beam assembly **102.** The telescoping coupling **373** is rotatably coupled to the gear box **371** and rearwardly extends between the gear box **371** and an inline coupling **374.** The inline coupling **374** can be positioned proximate to an aft end of the thrust reverser sleeve segment **82,** and can be connected to the sleeve segment **82** by a bracket **379.** Accordingly, the inline coupling **374** moves with the thrust reverser sleeve segment **82** as the sleeve segment **82** is moved between its stowed and deployed positions. The extensible portion **377** of the VAFN actuator **370** is disposed between the inline coupling **374** and a support **351** on the fan nozzle segment **54.** As described below, the extensible portion **377** is configured to move the fan nozzle segment **54** between its forward stowed position and its aft deployed position. In the embodiment shown in **FIG. 18****,** the extensible portion **377** and the telescoping coupling **373** are axially aligned with each other.

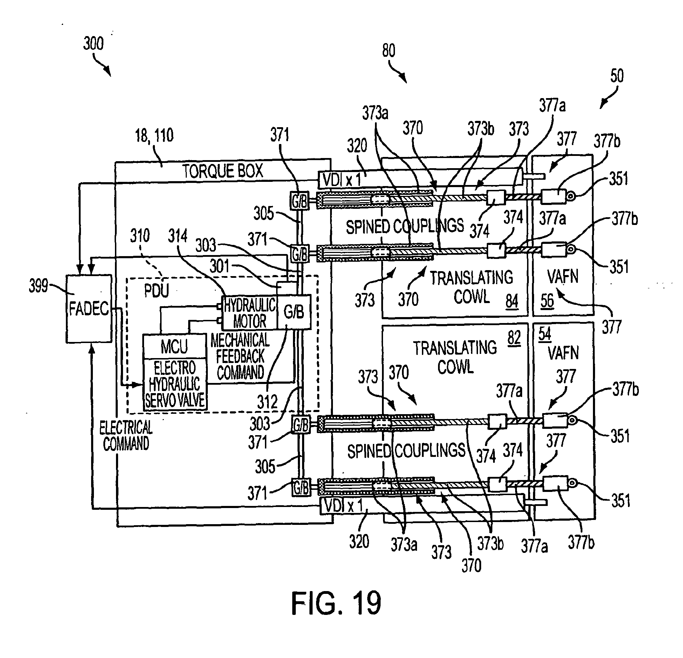

**FIG. 19** is a schematic diagram of one embodiment of the VAFN actuation system **300** that incorporates a plurality of VAFN actuators **370** as described above. The actuation system **300** can be used in a turbofan engine **10** having a cascade-type thrust reverser **80** like that previously described, and to translate one or more fan nozzle segments **54, 56** between their stowed and deployed positions. In the actuator system **300** shown schematically in **FIG. 19****,** a pair of translating thrust reverser sleeve sections **82, 84** are movably disposed aft of a nacelle **18** and torque ring **110,** and a pair of translating fan nozzle segments **54, 56** are movably disposed aft of the sleeve sections **82, 84.** Each fan nozzle segment **54, 56** is positioned in its stowed and deployed positions by one or more VAFN actuators **370.** Each VAFN actuator can include a gear box **371,** a telescoping coupling **373** having a non-translating portion **373a** and a movable portion **373b,** an inline coupling **374,** and an extensible portion 377 having an extensible sleeve **377b.** The telescoping coupling **373** permits fore and aft movement of the thrust reverser sleeve sections **82, 84** while maintaining rotational engagement between the gear box **371** and the inline coupling **374.** In this embodiment **300,** the longitudinal axes of the telescoping coupling **373** and the extensible portion **377** are axially aligned, and the coupling 373 and extensible portion **377** are directly connected together without any intervening gears or transmission. Accordingly, the rotational speed and/or output torque provided to the extensible portion **377** by the inline coupling **374** is substantially the same as the rotational speed and/or torque provided to the coupling **374** by the gear box **371** and the telescoping coupling **373.**

As shown in **FIG. 19****,** the VAFN actuators **370** can be connected to a power drive unit (PDU) **310.** Flexible drive shafts **303** can rotatably connect adjacent gear boxes 371 to the PDU **310,** and flexible transmission shafts **305** can rotatably connect gear boxes **371** that are not directly connected to the PDU **310.** The PDU **310** can include a power gear box **312** driven by a motor **314.** When actuated, the PDU **310** drives the shafts **303, 305** and interconnected gear boxes **371,** thereby simultaneously actuating the VAFN actuators **370** and effecting desired simultaneous movement of the fan nozzle segments **54, 56** in a forward or aft direction. The non-translating portion **373a** and the movable portion **373b** of the actuators **370** can be rotatably coupled together by a splined configuration similar to that shown in **FIG. 15****.**

**FIG. 19** also shows a schematic representation of a control system for use with a VAFN actuation system **300.** In the embodiment shown, one or more linear variable displacement transducers (LVDTs) **320** can be positioned to detect the positions of the fan nozzle segments **54, 56** relative to the nacelle **18** and torque box **110,** and/or to the thrust reverser sleeve segments **82, 84.** The LVDTs **320** can be connected to an automatic control system **399** that controls operation of the PDU **310.** For example, the LVDTs **320** can be operably connected to a Full Authority Digital Engine Control (FADEC) system. Inputs from the LVDTs **320** can be used by the control system **399** to determine when the fan nozzle segments **54, 56** are in there fully stowed or fully deployed positions, for example, and to control operation of the PDU **310** accordingly. Alternatively or in addition, the PDU **310** can be equipped with one or more rotary variable displacement transducers (RVDTs) **301** to detect when predetermined rotational displacement limits for the PDU **310** have been reached.

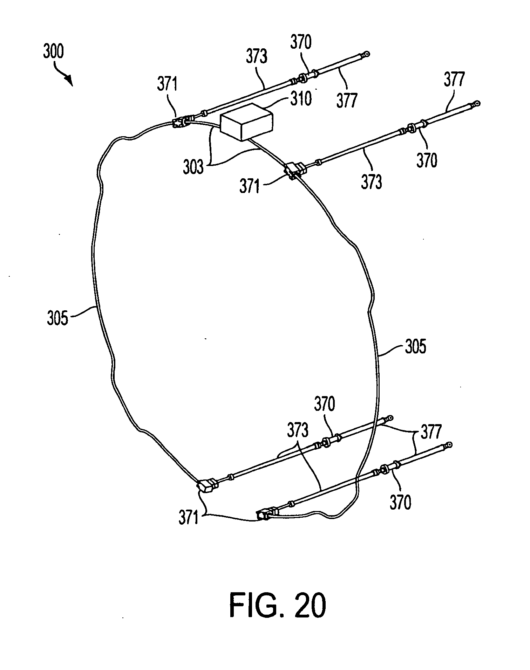

**FIG. 20** shows the VAFN actuation system **300** separated from an associated thrust reverser **80** and fan nozzle assembly **50.** Though the actuation system **300** can include two actuators **370** on each side of the PDU **310** as shown in **FIGS. 19-20****,** the system **300** can alternatively include a single actuator **370** or more than two actuators **370** on either side.

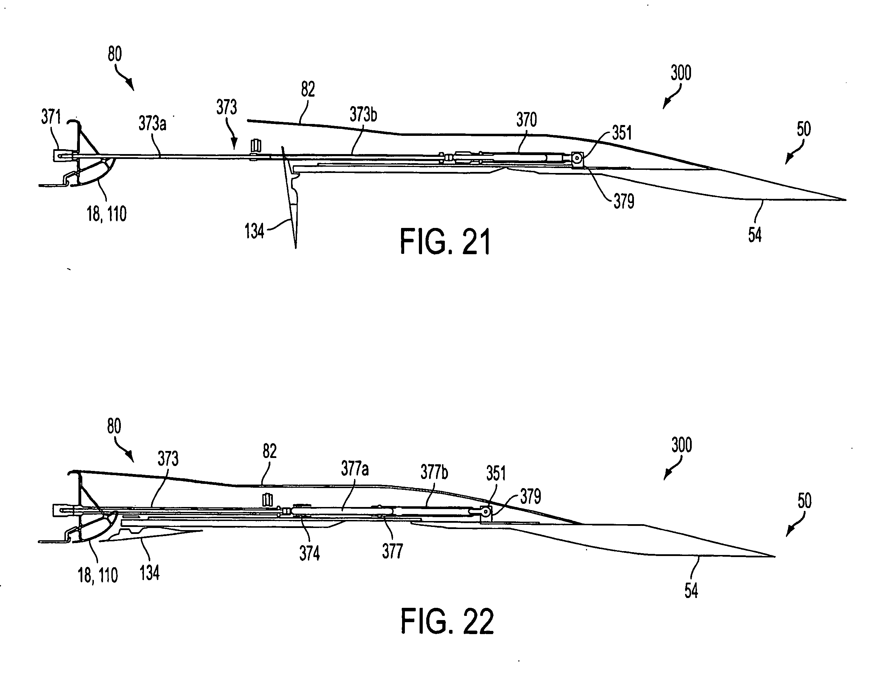

**FIG. 21** shows a VAFN actuator **370** and an associated thrust reverser sleeve section **82** in its deployed position. In the configuration shown in **FIG. 21****,** a shaft **373a** is coupled to the gear box **371,** and a mating extendable sleeve **373b** is connected to the coupling **374.** When the thrust reverser sleeve **82** is deployed, the sleeve **373b** of the actuator **370** rearwardly extends from the mating shaft **373a,** and at least a portion of the sleeve **373b** remains engaged on the shaft **373a.** The gear box **371** remains rotatably connected to the inline coupling **374** by the telescoping coupling **373.**

**FIG. 22** shows the extensible portion **377** of the actuator **370** in an extended position, and the fan nozzle segment **54** in a deployed position. When extended, the threaded sleeve **377b** displaces the fan nozzle segment **54** away from the torque ring **110** and the thrust reverser sleeve section **82.** At least a portion of the threaded sleeve **377b** remains threadably engaged on the jack screw **377a** when the sleeve **377b** is fully extended.

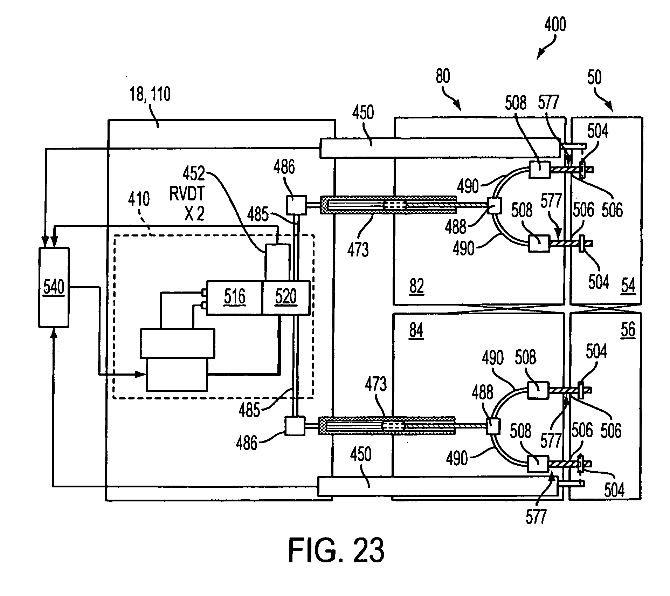

Another embodiment of a VAFN actuation system **400** according to the invention is shown schematically in **FIG. 23****.** The actuation system **400** can be used in a turbofan engine having a cascade-type thrust reverser **80** like that previously described, and to translate one or more fan nozzle segments **54, 56** between their stowed and deployed positions. In the actuator system **400** shown schematically in **FIG. 23****,** a pair of translating thrust reverser sleeve sections **82, 84** are movably disposed aft of a nacelle **18** and torque ring **110,** and a pair of translating fan nozzle segments **54, 56** are movably disposed aft of the sleeve sections **82, 84.** Each fan nozzle segment **54, 56** is positioned in its stowed and deployed positions by the VAFN actuator system **400.** In this embodiment, a PDU **410** can include a gear box **520** driven by a motor **516**. The motor **516** can be hydraulic, electric, pneumatic, or the like. The PDU gear box **520** is rotatably coupled to a pair of actuator gear boxes **486** by flexible drive shafts **485**. Each actuator gear box **486** is rotatably coupled to a transmission **488** by a telescoping coupling **473**. The telescoping couplings **473** can be like the telescoping couplings **273, 373** described above, for example. Two or more extensible actuators **577** are rotatably coupled to each transmission **488** by actuator shafts **490**. The actuators **577** can each include a jack head **508,** a jack screw **506**, and a translating threaded sleeve **504** connected to a fan nozzle segment **54, 56**. The telescoping couplings **473** permit translation of the thrust reverser sleeve segments **82, 84** while maintaining rotational engagement between the actuator gear boxes **486** and the transmissions **488** and extensible actuators **577**. Rotation of the actuator gear boxes **486** by the PDU **410** results in rotation of the telescoping couplings **473** and the transmissions **488**. The transmissions **488** in turn drive the actuators **577**, which effect desired displacement of the fan nozzle segments **54, 56**. The system **400** can include one or more LVDTs **450** and/or one or more RVDTs **452** to provide control feedback to a control processor **540** for use in controlling operation of the PDU **410**.

Persons of ordinary skill in the art will understand that while the invention has been described in terms of various embodiments and various aspects and features, certain modifications, variations, changes and additions can be made to the described embodiments without departing from the spirit and scope of the invention. All such modifications, variations, changes and additions are intended to be within the scope of the appended claims.

## Claims

1. A variable area fan nozzle assembly (12) for a turbofan engine (10), the assembly comprising:
(a) a nacelle (18) having an aft edge;
(b) a translating thrust reverser sleeve (82, 84) movably disposed aft of the aft edge and including a trailing edge, the thrust reverser sleeve being movable between a forward position and an aft position;
(c) a translating fan nozzle (50) having a forward edge, the fan nozzle (50) being movably disposed behind the trailing edge and being movable between a stowed position and a deployed position, wherein an upstream bypass flow exit (60) is defined between the trailing edge and the forward edge when the fan nozzle (50) in the deployed position; and
(d) an actuation system (200) for selectively moving the fan nozzle (50) between the stowed position and the deployed position, the actuation system comprising a power drive unit (210), at least one extensible actuator (277) disposed between the thrust reverser sleeve (82, 84) and the fan nozzle (50) **characterised in that** at least one telescoping coupling (273) is disposed between the thrust reverser sleeve (82, 84) and the nacelle (18);
(e) the extensible actuator (277) is rotatably coupled to the power drive unit (210) through the telescoping coupling (273), and
(f) the extensible actuator (277) includes a jack screw (277a) and a threaded sleeve (277b) that is threadably engaged with the jack screw (277a), wherein rotation of the telescoping coupling (273) at a first rotational speed causes rotation of the jack screw (277a) at a second rotational speed that is different from the first rotational speed.

2. A variable area fan nozzle assembly (12) according to claim 1 wherein the telescoping coupling (273) comprises a rotating sleeve (273a) and a shaft (273b) slidably received within the rotating sleeve.

3. A variable area fan nozzle assembly (12) according to claim 2 wherein at least a portion of the shaft (273b) includes a plurality of circumferentially spaced splines (291), and the rotating sleeve (273a) includes a bore having a plurality of grooves (293) configured to receive the splines (291).

4. A variable area fan nozzle assembly (12) according to claim 1 wherein the telescoping coupling (273) comprises a shaft (273b) that is slidably received in an elongated sleeve (273a), and wherein at least a portion of the shaft (273b) includes splines (291) that are slidably received in grooves (293) within the elongated sleeve (273a), wherein the splines and grooves substantially prevent relative rotation between the shaft and elongated sleeve when the shaft is received in the elongated sleeve.

5. A variable area fan nozzle assembly (12) according to any one of claims 1 to 4 wherein the telescoping coupling (273) is connected to the power drive unit (210) by one or more flexible shafts (203).

6. A variable area fan nozzle assembly (12) according to any one of the preceding claims wherein the extensible actuator (277) has a first longitudinal axis and the telescoping coupling (273) includes a second longitudinal axis, wherein the first longitudinal axis is offset from the second longitudinal axis.

7. A variable area fan nozzle assembly (12) according to claim 6 wherein telescoping coupling (273) is rotatably coupled to the extensible actuator (277) by a jack head (275).

8. A variable area fan nozzle assembly (12) according to any one of claims 1-5 wherein the extensible actuator (277) and the telescoping coupling (273) are substantially axially aligned.

9. A variable area fan nozzle assembly (12) according to any one of the preceding claims and further comprising at least one variable displacement transducer (301, 320) configured to detect displacement of the fan nozzle.

10. A variable area fan nozzle assembly (12) according to claim 9 wherein the variable displacement transducer (301, 320) is operably connected to an engine control system (399).

11. A variable area fan nozzle assembly (12) according to any one of the preceding claims and comprising a first extensible actuator (277) and a second extensible actuator (277) disposed between the thrust reverser sleeve (82, 84) and the fan nozzle (50), wherein the first extensible actuator (277) and the second extensible actuator (277) are rotatably coupled to the power drive unit (210) through a single telescoping coupling (273).

12. An actuator (270) for a translating variable area fan nozzle (50) as claimed in any of the preceding claims, and **characterised by** comprising:
(a) an extensible portion (277) comprising a jack screw (277a) and a translating threaded sleeve (277b) threadably engaged with the jack screw (277a);
(b) the actuator (270) further comprising a telescoping coupling (273) rotatably coupled to the extensible portion (277), wherein the length of the telescoping coupling (273) can be altered between a first length and a second length that is longer than the first length while maintaining rotational engagement with the extensible portion (277); and
(c) wherein rotation of the telescoping coupling (273) at a first rotational speed causes rotation of the jack screw (277a) at a second rotational speed that is different from the first rotational speed.

13. An actuator system (200) for selectively displacing a translating variable area fan nozzle (50) as claimed in any of claims 1 to 11 between a stowed position and a deployed position, the system (200) **characterised by** comprising:
(a) at least one actuator (277) comprising a jack screw (277a) and a translating threaded sleeve (277b) treadably engaged with the jack screw (277a) and a telescoping coupling (273); and
(b) a power drive unit (210) operably connected to the jack screw (277a) through the telescoping coupling (273), and
(c) wherein rotation of the telescoping coupling (273) at a first rotational speed causes rotation of the jack screw (277a) at a second rotational speed that is different from the first rotational speed.

## Patentansprüche

1. Flachstrahldüsenbaugruppe mit variablem Querschnitt (12) für ein Bypasstriebwerk (10), wobei die Baugruppe aufweist:
(a) eine Triebwerksgondel (18) mit einem hinteren Rand;
(b) eine translatorische Schubumkehreinrichtungshülse (82, 84), die nach hinten vom hinteren Rand beweglich angeordnet ist und eine Hinterkante umfasst, wobei die Schubumkehreinrichtungshülse zwischen einer vorderen Position und einer hinteren Position beweglich ist;
(c) eine translatorische Flachstrahldüse (50) mit einer Vorderkante, wobei die Flachstrahldüse (50) hinter der Hinterkante beweglich angeordnet ist, und wobei sie zwischen einer Stauposition und einer Einsatzposition beweglich ist, wobei ein stromaufwärts gelegener Bypass-Stromaustritt (60) zwischen der Hinterkante und der Vorderkante definiert wird, wenn die Flachstrahldüse (50) in der Einsatzposition ist; und
(d) ein Betätigungssystem (200) für das selektive Bewegen der Flachstrahldüse (50) zwischen der Stauposition und der Einsatzposition, wobei das Betätigungssystem aufweist: eine Kraftantriebseinheit (210); mindestens ein ausziehbares Betätigungselement (277), das zwischen der Schubumkehreinrichtungshülse (82, 84) und der Flachstrahldüse (50) angeordnet ist, **dadurch gekennzeichnet, dass** mindestens eine Teleskopkupplung (273) zwischen der Schubumkehreinrichtungshülse (82, 84) und der Triebwerksgondel (18) angeordnet ist;
(e) das ausziehbare Betätigungselement (277) drehbar mit der Kraftantriebseinheit (210) mittels der Teleskopkupplung (273) verbunden ist; und
(f) das ausziehbare Betätigungselement (277) eine Hubspindel (277a) und eine Gewindehülse (277b) umfasst, die verschraubbar mit der Hubspindel (277a) in Eingriff gebracht wird, wobei die Drehung der Teleskopkupplung (273) mit einer ersten Umdrehungsgeschwindigkeit die Drehung der Hubspindel (277a) mit einer zweiten Umdrehungsgeschwindigkeit bewirkt, die von der ersten Umdrehungsgeschwindigkeit verschieden ist.

2. Flachstrahldüsenbaugruppe mit variablem Querschnitt (12) nach Anspruch 1, bei der die Teleskopkupplung (273) eine rotierende Hülse (273a) und eine Welle (273b) aufweist, die verschiebbar innerhalb der rotierenden Hülse aufgenommen wird.

3. Flachstrahldüsenbaugruppe mit variablem Querschnitt (12) nach Anspruch 2, bei der mindestens ein Abschnitt der Welle (273b) eine Vielzahl von peripher beabstandeten Schiebekeilen (291) umfasst, und bei der die rotierende Hülse (273a) einen Innendurchmesser mit einer Vielzahl von Nuten (293) aufweist, die ausgebildet sind, um die Schiebekeile (291) aufzunehmen.

4. Flachstrahldüsenbaugruppe mit variablem Querschnitt (12) nach Anspruch 1, bei der die Teleskopkupplung (273) eine Welle (273b) aufweist, die verschiebbar in einer länglichen Hülse (273a) aufgenommen wird, und bei der mindestens ein Abschnitt der Welle (273b) Schiebekeile (291) umfasst, die verschiebbar in den Nuten (293) innerhalb der länglichen Hülse (273a) aufgenommen werden, wobei die Schiebekeile und die Nuten im Wesentlichen eine relative Drehung zwischen der Welle und der länglichen Hülse verhindern, wenn die Welle in der länglichen Hülse aufgenommen wird.

5. Flachstrahldüsenbaugruppe mit variablem Querschnitt (12) nach einem der Ansprüche 1 bis 4, bei der die Teleskopkupplung (273) mit der Kraftantriebseinheit (210) mittels einer oder mehrerer elastischer Wellen (203) verbunden ist.

6. Flachstrahldüsenbaugruppe mit variablem Querschnitt (12) nach einem der vorhergehenden Ansprüche, bei der das ausziehbare Betätigungselement (277) eine erste Längsachse aufweist und die Teleskopkupplung (273) eine zweite Längsachse umfasst, wobei die erste Längsachse von der zweiten Längsachse versetzt ist.

7. Flachstrahldüsenbaugruppe mit variablem Querschnitt (12) nach Anspruch 6, bei der die Teleskopkupplung (273) mit dem ausziehbaren Betätigungselement (277) mittels eines Hubkopfes (275) drehbar verbunden ist.

8. Flachstrahldüsenbaugruppe mit variablem Querschnitt (12) nach einem der Ansprüche 1 bis 5, bei der das ausziehbare Betätigungselement (277) und die Teleskopkupplung (273) im Wesentlichen axial ausgerichtet sind.

9. Flachstrahldüsenbaugruppe mit variablem Querschnitt (12) nach einem der vorhergehenden Ansprüche und die außerdem mindestens einen verstellbaren Verschiebungswandler (301, 320) aufweist, der ausgebildet ist, um die Verschiebung der Flachstrahldüse zu ermitteln.

10. Flachstrahldüsenbaugruppe mit variablem Querschnitt (12) nach Anspruch 9, bei der der verstellbare Verschiebungswandler (301, 320) funktionell mit einem Triebwerkssteuersystem (399) verbunden ist.

11. Flachstrahldüsenbaugruppe mit variablem Querschnitt (12) nach einem der vorhergehenden Ansprüche und die ein erstes ausziehbares Betätigungselement (277) und ein zweites ausziehbares Betätigungselement (277) aufweist, das zwischen der Schubumkehreinrichtungshülse (82, 84) und der Flachstrahldüse (50) angeordnet ist, wobei das erste ausziehbare Betätigungselement (277) und das zweite ausziehbare Betätigungselement (277) drehbar mit der Kraftantriebseinheit (210) mittels einer einzelnen Teleskopkupplung (273) verbunden sind.

12. Betätigungselement (270) für eine translatorische Flachstrahldüse mit variablem Querschnitt (50) nach einem der vorhergehenden Ansprüche und **dadurch gekennzeichnet, dass** es aufweist:
(a) einen ausziehbaren Abschnitt (277), der eine Hubspindel (277a) und eine translatorische Gewindehülse (277b) aufweist, die verschraubbar mit der Hubspindel (277a) in Eingriff kommt;
(b) dass das Betätigungselement (270) außerdem eine Teleskopkupplung (273) aufweist, die drehbar mit dem ausziehbaren Abschnitt (277) verbunden ist, wobei die Länge der Teleskopkupplung (273) zwischen einer ersten Länge und einer zweiten Länge verändert werden kann, die länger ist als die erste Länge, während ein Rotationseingriff mit dem ausziehbaren Abschnitt (277) aufrecht erhalten wird; und
(c) wobei die Drehung der Teleskopkupplung (273) mit einer ersten Umdrehungsgeschwindigkeit die Drehung der Hubspindel (277a) mit einer zweiten Umdrehungsgeschwindigkeit bewirkt, die von der ersten Umdrehungsgeschwindigkeit verschieden ist.

13. Betätigungselementsystem (200) für das selektive Verschieben einer translatorischen Flachstrahldüse mit variablem Querschnitt (50) nach einem der Ansprüche 1 bis 11 zwischen einer Stauposition und einer Einsatzposition, wobei das System (200) **dadurch gekennzeichnet ist, dass** es aufweist:
(a) mindestens ein Betätigungselement (277), das eine Hubspindel (277a) und eine translatorische Gewindehülse (277b), die verschraubbar mit der Hubspindel (277a) in Eingriff kommt, und eine Teleskopkupplung (273) aufweist; und
(b) eine Kraftantriebseinheit (210), die funktionell mit der Hubspindel (277a) mittels der Teleskopkupplung (273) verbunden ist; und
(c) wobei die Drehung der Teleskopkupplung (273) mit einer ersten Umdrehungsgeschwindigkeit die Drehung der Hubspindel (277a) mit einer zweiten Umdrehungsgeschwindigkeit bewirkt, die von der ersten Umdrehungsgeschwindigkeit verschieden ist.

## Revendications

1. Assemblage de tuyère de soufflante à section variable (12) pour un moteur de turboréacteur (10), l'assemblage comprenant :
(a) une nacelle (18) comportant un bord arrière ;
(b) un manchon inverseur de poussée à translation (82, 84), agencé de manière mobile à l'arrière du bord arrière et englobant un bord de fuite, le manchon inverseur de poussée pouvant être déplacé entre une position avant et une position arrière ;
(c) une tuyère de soufflante à translation (50), comportant un bord avant, la tuyère de la soufflante étant agencée de manière mobile derrière le bord de fuite et pouvant être déplacée entre une position repliée et une position déployée, une sortie amont du débit de dérivation (60) étant définie entre le bord de fuite et le bord avant lorsque la tuyère de la soufflante (50) se trouve dans la position déployée ; et
(d) un système d'actionnement (200), pour déplacer sélectivement la tuyère de la soufflante (50) entre la position repliée et la position déployée, le système d'actionnement comprenant un bloc d'entraînement (210), au moins un actionneur extensible (277) agencé entre le manchon inverseur de poussée (82, 84) et la tuyère de soufflante (50), **caractérisé en ce qu'**au moins un accouplement télescopique (273) est agencé entre le manchon inverseur de poussée (82, 84) et la nacelle (18) ;
(e) l'actionneur extensible (277) étant accouplé de manière rotative au bloc d'entraînement (210) par l'intermédiaire de l'accouplement télescopique (273) ; et
(f) l'actionneur extensible (277) englobant une vis de montée (277a) et un manchon fileté (277b), engagé par filetage dans la vis de montée (277a), la rotation de l'accouplement télescopique (273) à une première vitesse de rotation entraînant la rotation de la vis de montée (277a) à une deuxième vitesse de rotation, différente de la première vitesse de rotation.

2. Assemblage de tuyère de soufflante à section variable (12) selon la revendication 1, dans lequel l'accouplement télescopique (273) comprend un manchon rotatif (273a) et un arbre (273b), reçu de manière coulissante dans le manchon rotatif.

3. Assemblage de tuyère de soufflante à section variable (12) selon la revendication 2, dans lequel au moins une partie de l'arbre (273b) englobe plusieurs cannelures à espacement circonférentiel (291), le manchon rotatif (273a) englobant un alésage comportant plusieurs rainures (293) configurées de sorte à recevoir les cannelures (291).

4. Assemblage de tuyère de soufflante à section variable (12) selon la revendication 1, dans lequel l'accouplement télescopique (273) comprend un arbre (273b), reçu de manière coulissante dans un manchon allongé (273a), au moins une partie de l'arbre (273b) englobant des cannelures (291), reçues de manière coulissante dans des rainures (293) dans le manchon allongé (273a), les cannelures et les rainures empêchant pour l'essentiel la rotation relative entre l'arbre et le manchon allongé lorsque l'arbre est reçu dans le manchon allongé.

5. Assemblage de tuyère de soufflante à section variable (12) selon l'une quelconque des revendications 1 à 4, dans lequel l'accouplement télescopique (273) est connecté au bloc d'entraînement (210) par l'intermédiaire d'un ou de plusieurs arbres flexibles (203).

6. Assemblage de tuyère de soufflante à section variable (12) selon l'une quelconque des revendications précédentes, dans lequel l'actionneur extensible (277) comporte un premier axe longitudinal, l'accouplement télescopique (273) englobant un deuxième axe longitudinal, le premier axe longitudinal étant décalé par rapport au deuxième axe longitudinal.

7. Assemblage de tuyère de soufflante à section variable (12) selon la revendication 6, dans lequel l'accouplement télescopique (273) est accouplé de manière rotative à l'actionneur extensible (277) par une tête de vérin (275).

8. Assemblage de tuyère de soufflante à section variable (12) selon l'une quelconque des revendications 1 à 5, dans lequel l'actionneur extensible (277) et l'accouplement télescopique (273) sont pour l'essentiel alignés axialement.

9. Assemblage de tuyère de soufflante à section variable (12) selon l'une quelconque des revendications précédentes, comprenant en outre au moins un transducteur à déplacement variable (301, 320), configuré de sorte à détecter le déplacement de la tuyère de la soufflante.

10. Assemblage de tuyère de soufflante à section variable (12) selon la revendication 9, dans lequel le transducteur à déplacement variable (301, 320) est connecté en service à un système de commande du moteur (399).

11. Assemblage de tuyère de soufflante à section variable (12) selon l'une quelconque des revendications précédentes, comprenant un premier actionneur extensible (277) et un deuxième actionneur extensible (277), agencés entre le manchon inverseur de poussée (82, 84) et la tuyère de la soufflante (50), le premier actionneur extensible (277) et le deuxième actionneur extensible (277) étant accouplés de manière rotative au bloc d'entraînement (210) par l'intermédiaire d'un seul accouplement télescopique (273).

12. Actionneur (270) pour une tuyère de soufflante à section variable et à translation (50) selon l'une quelconque des revendications précédentes, et **caractérisé en ce qu'**il comprend :
(a) une partie extensible (277), comprenant une vis de montée (277a) et un manchon fileté à translation (277b), engagé par filetage dans la vis de montée (277a) ;
(b) l'actionneur (270) comprenant en outre un accouplement télescopique (273), accouplé de manière rotative à la partie extensible (277), la longueur de l'accouplement télescopique (273) pouvant être changée entre une première longueur et une deuxième longueur, supérieure à la première longueur, tout en maintenant l'engagement rotatif dans la partie extensible (277) ; et
(c) la rotation de l'accouplement télescopique (273) à une première vitesse de rotation entraînant la rotation de la vis de montée (277a) à une deuxième vitesse de rotation, différente de la première vitesse de rotation.

13. Système d'actionnement (200) pour déplacer de manière sélective une tuyère de soufflante à section variable et à translation (50) selon l'une quelconque des revendications 1 à 11, entre une position repliée et une position déployée, le système (200) étant **caractérisé en ce qu'**il comprend ::
(a) au moins un actionneur (277), comprenant une vis de montée (277a) et un manchon fileté à translation (277b), engagé par filetage dans la vis de montée (277a), et un accouplement télescopique (273) ; et
(b) un bloc d'entraînement (210), connecté en service à la vis de montée (277a) par l'intermédiaire de l'accouplement télescopique (273) ; et
(c) la rotation de l'accouplement télescopique (273) à une première vitesse de rotation entraînant la rotation de la vis de montée (277a) à une deuxième vitesse de rotation, différente de la première vitesse de rotation.
